# EUROPÄISCHE PATENTSCHRIFT

(11) **EP 0 951 490 B1**
(45) Veröffentlichungstag und Bekanntmachung des Hinweises auf die Patenterteilung: **24.07.2002**
(21) Anmeldenummer: 97954449.1
(22) Anmeldetag: 19.12.1997
(51) Int. Cl.: C08F 12/04

(54) **VERFAHREN ZUR HERSTELLUNG VON POLYMERISATEN AUS VINYLAROMATISCHEN VERBINDUNGEN DURCH DISPERSIONSPOLYMERISATION**
PROCESS FOR PREPARING POLYMERS FROM VINYLAROMATIC COMPOUNDS BY DISPERSION POLYMERIZATION
PROCEDE DE PREPARATION DE POLYMERISATS A BASE DE COMPOSES VINYLAROMATIQUES PAR POLYMERISATION EN DISPERSION

(30) Priorität: 09.01.1997 DE 19700305
(43) Veröffentlichungstag der Anmeldung: 27.10.1999
(73) Patentinhaber: BASF AKTIENGESELLSCHAFT, 67056 Ludwigshafen (DE)
(72) Erfinder: WÜNSCH, Josef, D-67105 Schifferstadt (DE); SCHNEIDER, Michael, D-67434 Neustadt (DE)
(86) Internationale Anmeldenummer: EP9707213
(87) Internationale Veröffentlichungsnummer: WO9830613

(56) Entgegenhaltungen:
- EP-A- 0 361 309
- DE-A- 4 330 969
- FR-A- 2 137 676

## Beschreibung

Die Erfindung betrifft ein Verfahren zur Herstellung von Polymerisaten aus vinylaromatischen Verbindungen in Gegenwart von Metallocenkatalysatorsystemen in Dispersion.

Die hierbei erhältlichen Polymerisate können zur Herstellung von Fasern, Folien und Formkörpern verwendet werden.

Die Polymerisation von Styrol in Gegenwart von Metallocenkatalysatorsystemen führt zu Polymerisaten mit hoher Stereoregularität und ist z. B. ausführlich in EP-A 0 210 615 beschrieben. Syndiotaktisches Polystyrol besitzt aufgrund seiner Kristallinität einen sehr hohen Schmelzpunkt von ca 270°C, hohe Steifigkeit und Zugfestigkeit, Dimensionsstabilität, eine niedrige Dielektrizitätskonstante und eine hohe Chemikalienbeständigkeit. Das mechanische Eigenschaftsprofil wird selbst bei Temperaturen über der Glastemperatur beibehalten.

Bei der Metallocen-katalysierten Polymerisation von Styrol tritt häufig Kristallisation des entstehenden syndiotaktischen Polystyrols schon ab ca. 10% Umsatz auf. Dies führt einerseits zur Bildung von Wandbelägen, andererseits auch zu einem extremen Viskositätsanstieg während der Polymerisation, was die Handhabung und Abfuhr der Reaktionswärme insbesondere im technischen Maßstab erschwert.

Zur Lösung dieses Problemes wurden verschiedene Verfahren unter Verwendung spezieller Reaktoren oder Extruder versucht. Die EP-A-0 535 582 beschreibt ein Verfahren zur Herstellung von syndiotaktischem Polystyrol in einem gerührten Festbett, das den Wandbelag zwar reduzieren aber nicht verhindern kann. Der Reaktor muß mit einem speziellen Rührer zur Erzeugung eines homogen Wirbelbettes ausgestattet sein. Die Temeraturkontrolle erfolgt über teilweise Verdampfung von Styrol durch Unterdruck mittels einer aufwendigen Vakuumsteuerung.

EP-A 0 584 646 und EP-A 0 389 939 beschreiben die Herstellung von syndiotaktischem Polystyrol in selbstreinigenden Doppelschneckenextrudern oder Knetern ohne Toträume. Bei beiden Verfahren wird aufgrund der bei höheren Umsätzen sprunghaft ansteigenden Reibungskräfte und der für den Weiterbetrieb notwendigen Motorleistung nicht bis zu vollständigem Umsatz polymerisiert, sondern nur soweit, daß das mit Monomeren getränkte Polymerpulver bei weiteren Verarbeitungsschritten nicht mehr verklumpt.

Im Falle der anionischen Initiierung ist das Verfahren der Dispersionspolymerisation bekannt. Es wird gezielt angewandt zur Herstellung kleiner Polyatyrolpartikel, wie beispielsweise in Journal of the Polymer Science, Part A, Polymer Chemistry, Vol. 34 (1996), Seiten 2633 - 2649 beschrieben. Von entscheidender Bedeutung ist die Auswahl des Dispergierhilfsmittels zur Stabilisierung der Dispersion.

Die DE-A 43 30 969 beschreibt ein Verfahren zur Herstellung von Polystyrolmischungen durch Polymerisation von Styrol in einer organischen Flüssigkeit in Gegenwart eines Styrol-Butadien-Blockcopolymeren und einem Metallocenkatalysatorsystems. Für die bevorzugte Ausführungsform werden allerdings Drücke von 5 bis 20 bar benötigt, andernfalls erhält man Polymerisate mit einem sehr niedrigen Molekulargewicht von ca. 30 000 g/mol.

Aufgabe der Erfindung war es ein Verfahren zur Herstellung von syndiotaktischem vinylaromatischen Polymerisaten unter Verwendung von Metallocen-Katalysatoren zur Verfügung zu stellen, das die oben genannten Nachteile nicht aufweist und in gewöhnlichen Rührreaktoren bei niedrigen Viskositäten durchgeführt werden kann.

Demgemäß wurde ein Verfahren gefunden, bei dem die metallocenkatalysierte Polymerisation von vinylaromatischen Monomeren in Dispersion in Gegenwart eines Dispergierhilfsmittels und eines Katalysators erhältlich aus A) einem Übergangsmetallkomplex der II. bis VIII. Nebengruppe, B) einem Kationen bildenden Agens und C) gegebenenfalls einer Aluminiumverbindung durchgeführt wird und wobei man als Dispergierhilfsmittel Blockcopolymere mit mindestens einem Dienblock B und mindestens einem Block s aus einem copolymeren eines vinylaromatischen Monameren und 1,1-Diphenylethylen oder dessen an den aromatischen Ringen ggf. mit Alkylgruppen mit bis zu 22 C-Atomen substituierten Derivaten verwendet.

Als vinylaromatische Verbindungen eignen sich besonders Verbindungen der allgemeinen Formel Z 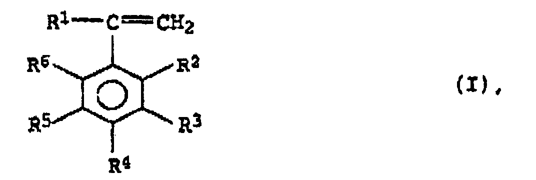 in der die Substituenten folgende Bedeutung haben:
- R¹: Wasserstoff oder C₁- bis C₄-Alkyl,
- R² bis R⁶: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen, beispielsweise C₄-C₈-Cycloalkyl oder anellierte Ringsysteme stehen.

Bevorzugt werden vinylaromatische Verbindungen der Formel I eingesetzt, in denen
- R¹: Wasserstoff bedeutet.

Als Substituenten R² bis R⁶ kommen insbesondere Wasserstoff, C₁- bis C₄-Alkyl, Chlor oder Phenyl, Biphenyl, Naphthalin oder Anthracen in Betracht. Zwei benachbarte Reste können auch gemeinsam für 4 bis 12 C-Atome aufweisende cyclische Gruppen stehen, so daß sich als Verbindungen der allgemeinen Formel I beispielsweise Naphthalinderivate oder Anthracenderivate ergeben.

Beispiele für solche bevorzugten Verbindungen sind:
Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, wobei eine Komponente auch weitere Kohlenwasserstoffreste wie Vinylgruppen, Allylgruppen, Methallylgruppen, Butenyl- oder Pentenylgruppen, vorzugsweise Vinylgruppen am Phenylring tragen kann. Vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel I ist an sich bekannt und beispielsweise in Beilstein 5, 367, 474, 485 beschrieben.

Als Dispergierhilfsmittel eignen sich Blockcopolymere mit mindestens einem Dienblock B und mindestens einem Block S aus einem Copolymeren eines vinylaromatischen Monomeren der allgemeinen Formel (I) und 1,1-Diphenylethylen oder dessen an den aromatischen Ringen ggf. mit Alkylgruppen mit bis zu 22 C-Atomen substituierten Derivaten, wie sie beispielsweise in der DE-A 44 20 917 beschrieben sind.

Beispielsweise eignen sich Blockcopolymerisate mit Blöcken S und B der allgemeinen Strukturen (S-B)ₙ, S-B-S, B-S-B, X[(S-B)ₙ]ₘ, X[(B-S)ₙ]ₘ, X(S-B-S)ₘ und X(B-S-B)ₘ, wobei X für den Rest eines m-funktionellen Kopplungsmittels oder eines m-funktionellen Initiators, n eine ganze Zahl im Bereich von 1 bis 5 und m für eine ganze Zahl im Bereich von 2 bis 20 stehen.

Als Dienkomponente für den Block B eignen sich grundsätzlich alle Diene, bevorzugt werden jedoch solche mit konjugierten Doppelbindungen wie Butadien, Isopren, Dimethylbutadien und Phenylbutadien. Der Dienblock kann partiell oder vollständig hydriert oder unhydriert sein. Die Molekulargewichte Mw der Blöcke B liegen im allgemeinen im Bereich von 10 000 bis 500 000, vorzugsweise von 50 000 bis 350 000 und besonders bevorzugt von 70 000 bis 250 000 g/mol.

Die Blöcke S bestehen aus einem Copolymeren eines vinylaromatischen Monomeren der allgemeinen Formel (I) und 1,1-Diphenylethylen oder dessen an den aromatischen Ringen ggf. mit Alkylgruppen mit bis zu 22 C-Atomen, bevorzugt mit 1 bis 4 C-Atomen wie Methyl, Ethyl, i- und n-Propyl und n-,i- oder tert.-Butyl substituierten Derivaten. Besonders bevorzugt wird jedoch das unsubstituierte 1,1-Diphenylethylen selbst eingesetzt. Der Anteil an Diphenylethylen im Block S liegt im Bereich von 15 bis 65 Gew.%, vorzugsweise von 25 bis 60 Gew.%.

Der Copolymerblock S ist vorzugsweise statistisch aufgebaut und besitzt ein Molekulargewicht Mw von im allgemeinen 20 000 bis 500 000, vorzugsweise 50 000 bis 300 000. Besonders bevorzugt ist ein Copolymerblock S aus Styrol und 1,1-Diphenylethylen.

Das Verhältnis der Blöcke S zu B liegt im allgemeinen im Bereich von 90 : 10 bis 20 : 80 besonders bevorzugt zwischen 90 : 15 und 65 : 35. Die Blockübergänge können sowohl scharf getrennt, wie auch "verschmiert" sein. Unter "verschmiertem"' Übergang versteht man, daß die angrenzenden Blöcke B und S im Übergangsbereich auch Monomere des jeweils anderen Blockes enthalten können.

Die Blockcopolymeren können nach üblichen Methoden der anionischen Polymerisation hergestellt werden, wie sie beispielsweise in M. Morton, Anionic Polymerisation, Principles and Practice, Academic Press, New York 1983, beschrieben sind. Die anionische Polymerisation wird mittels metallorganischer Verbindungen initiiert. Bevorzugt sind Verbindungen der Alkalimetalle, insbesondere des Lithiums. Beispiele für Initatoren sind Lithiumalkyle wie Methyllithium, Ethyllithium, iso-Propyllithium, n-, sec.- oder tert.-Butyllithium. Besonders bevorzugt wird n- oder s-Butyllithium eingesetzt. Als Lösungsmittel eignen sich gegenüber dem metallorganischen Initiator inerte Lösungsmittel. Zweckmäßigerweise verwendet man aliphatische oder aromatische Kohlenwasserstoffe. Geeignete Lösungsmittel sind beispielsweise Cyclohexan, Methylcyclohexan, Benzol, Toluol, Ethylbenzol oder Xylol.

Zur Beeinflußung der Polymerisationsparameter können dem Lösungsmittel geringe Mengen polarer, aprotischer Substanzen zugesetzt werden. Geeignet sind beispielsweise Ether wie Diethylether, Diisopropylether, Diethylenglykoldimethylether, Diethylenglykoldibutylether oder insbesondere Tetrahydrofuran sowie tertiäre Amine wie z.B. Tetramethylethylendiamin oder Pyridin. Das polare Cosolvens wird dem unpolaren Lösungsmittel in einer geringen Menge von ca 0,01 bis 5 Vol.-% zugesetzt. Besonders bevorzugt ist Tetrahydrofuran in einer Menge von 0,1 bis 0,3 Vol.-%.

Gemäß einer bevorzugten Ausführungsform des erfindungsgemäßen Verfahrens kann mindestens ein verzweigendes Monomer, eingesetzt werden.

Als verzweigende Monomere können Verbindungen der allgemeinen Formel II 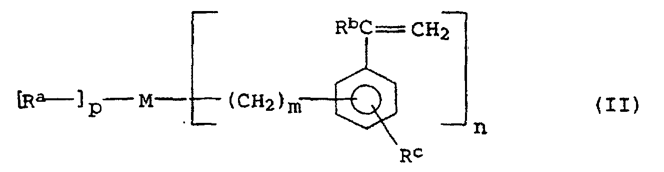 verwendet werden, in der die Variablen die folgende Bedeutung haben:
- R^{a}: Wasserstoff, Halogen, oder ein inerter organischer Rest mit bis zu 20 C-Atomen, wobei R^{a} im Falle von p ≽ 2 gleich oder verschieden sein kann und zwei Reste R^{a} zusammen mit dem an sie gebundenen Metallatom einen 3 bis 8-gliedrigen Ring bilden können und R^{a} ferner ein üblicher Komplexligand sein kann, wenn M ein Übergangsmetall darstellt,
- R^{b}: Wasserstoff, C₁-C₄-Alkyl oder Phenyl;
- R^{c}: Wasserstoff, C₁-C₄-Alkyl, Phenyl, Chlor oder ein ungesättigter Kohlenwasserstoffrest mit 2 bis 6 C-Atomen;
- M: C, Si, Ge, Sn, B, Al, Ga, N, P, Sb, Ti, Zr, Hf, V, Nb, Ta, Cr, Mo, W, Mn, Fe, Ru, Os, Co, Rh, Ir, Ni, Pd, Pt, Cu, Zn, Cd,
- n: 2-6;
- m: 0-20;
- p: 0-4;
mit der Maßgabe, daß die Summe aus n + p der Valenz von M entspricht.

Diese Monomere lassen sich z.B. über die Grignard-Verbindungen der Chlor(alkyl)styrole mit den entsprechenden Kohlenstoff-, Metall- oder Übergangsmetallverbindungen, z.B. den Halogenverbindungen erhalten. Solche Umsetzungen sind beispielsweise für den Fall, daß M Silizium, Germanium oder Zinn bedeutet in K. Nakanishi, J. Chem. Soc. Perkin Trans I, 1990, Seite 3362 beschrieben.

Besonders bevorzugt sind verzweigende Monomerbausteine der Formel II, in der M Kohlenstoff, Silizium, Germanium, Zinn oder Titan bedeutet, da sie leicht zugänglich sind. Der Index m steht vorzugsweise für 0 bis 8, besonders bevorzugt für 0 bis 4.

Beispielhaft können die Titan enthaltenden Monomeren der Formel IIa 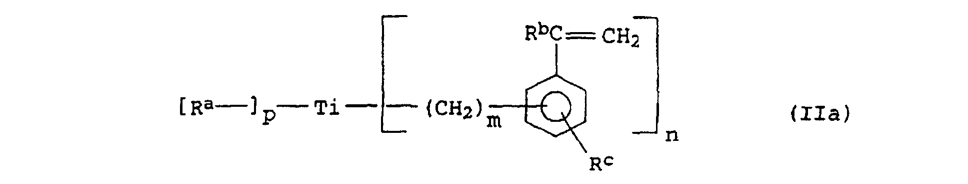 und die Titanverbindung IIb 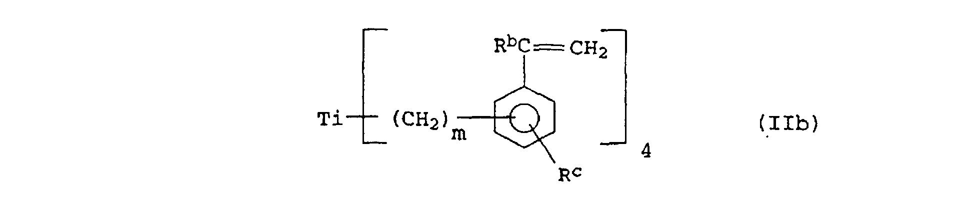 in der R^{a}, R^{b} und R^{c} sowie m, n und p die obengenannte Bedeutung haben, als verzweigende Monomere eingesetzt werden.

Der oder die inerten organischen Reste R^{a} haben keine wesentliche Bedeutung für das Verfahren. Sie dienen vielmehr lediglich zur Absättigung der freien Valenzen am M und können nach leichter Zugänglichkeit ausgewählt werden. Beispielsweise kommen ali-phatische, cycloaliphatische, Aryl-, Heteroaryl- oder Aralkylreste in Betracht. Aliphatische Reste sind u.a. Alkyl-, Alkoxy-, Alkenyl- oder Alkinyl-Reste mit z.B. 1 bis 2 bzw. 20 C-Atomen. Cycloaliphatische Reste sind u.a. Cycloalkyl- oder Cycloalkanreste mit 3 bis 8 C-Atomen. Anstelle einer Methylengruppe im Alkyl- oder Cycloalkylrest kann auch ein Sauerstoffatom in Etherfunktion vorliegen. Arylreste sind beispielsweise Phenyl- oder Naphthylreste, wobei auch zwei Phenylgruppen über ein Sauerstoff miteinander verbunden sein können. Aralkylreste sind z.B. solche mit 7 bis 20 C-Atomen, die sich durch Kombination eines Phenylrestes mit einem Alkylrest ergeben. Heteroarylreste sind z.B. Pyridyl, Pyrimidyl oder Furylreste. Die genannten Reste können auch weiter substituiert sein, z.B. durch Alkyl, Alkoxy, Halogen wie Fluor, Chlor oder Brom, Cyano, Nitro, Epoxy, Carbonyl, Estergruppierungen, Amide usw. Zwei der Reste R^{a} können auch mit dem Atom M einen 3 bis 6-gliedrigen Ring bilden, z.B. indem zwei Reste R^{a} eine Alkylenkette bilden, in der auch ein oder mehrere CH₂-Gruppen durch O in Etherfunktion ersetzt sein können.

Wenn M für ein Übergangsmetall steht, kann R^{a} auch übliche σ- oder π-gebundene Komplexliganden bedeuten wie Ethylen, Allyl, Butadien, Cyclopentadien, einfach oder mehrfach substituierte Cyclopentadiene, wie Methylcyclopentadien oder Pentamethylcyclopentadien, Benzol, Cyclohexadien, Cycloheptatrien, Cycloheptadien, Cyclooctatetraen, Cyclooctatrien, Cyclooctadien, Carbonyl, Oxalato, Cyano, Isonitril, Fulminato-C, Fulminato-O, Cyanato, Distickstoff, Ethylendiamin, Diethylentriamin, Triethylentetramin, Ethylendiamintetraacetat, Nitrosyl, Nitro, Isocyano, Pyridin, α,α-Dipyridyl, Trifluorphoshan, Phosphan, Diphosphan, Arsan, Acetylacetonato.

Der Rest R^{b} bedeutet besonders bevorzugt Wasserstoff oder Methyl. R^{c} steht für Wasserstoff, C₁-C₄-Alkyl wie Methyl, Ethyl, Propyl, Isopropyl sowie n-Butyl und die Butylisomeren, Phenyl, Chlor oder einen ungesättigten Kohlenwasserstoffrest mit 2 bis 6 C-Atomen wie Vinyl, Allyl, Methallyl, Butenyl oder Pentenyl.

Der verzweigende Monomerbaustein wird zweckmäßigerweise in einem Molverhältnis von vinylaromatischem Monomer zu verzweigendem Baustein zwischen 10 000 000 : 1 und 10 : 1 eingesetzt.

Erfindungsgemäß werden als Katalysatorkomponente A) Übergangsmetallkomplexe der II. bis VIII. Nebengruppe, bevorzugt der III. bis VIII. Nebengruppe verwendet. Ganz besonders bevorzugt sind Komplexe der Metalle Titan, Zirkonium und Hafnium.

Enthält der verzweigende Monomerbaustein der Formel II schon ein Übergangsmetall M, insbesondere Titan, so kann er je nach verwendeter Konzentration neben seiner Funktion als Verzweigungsbaustein auch gleichzeitig als Katalysatorkomponente A) verwendet werden.

Bevorzugt werden als Katalysatorkomponente A) Metallocenkomplexe, besonders bevorzugt solche der allgemeinen Formel III 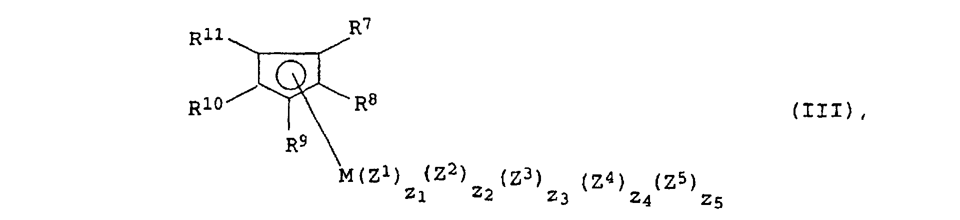 in der die Substituenten und Indices folgende Bedeutung haben:
- R⁷ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen, beispielsweise für annelierte Ringsysteme ist 4 bis 12 C-Atomen stehen können, oder Si(R¹²)₃,
- mit R¹²: C₁- bis C₁₀-Alkyl, C₆- bis C₁₅-Aryl oder C₃- bis C₁₀-Cycloalkyl,
- M: ein Metall der III. bis VI. Nebengruppe des Periodensystems der Elemente oder ein Metall der Lanthanidenreihe
- Z¹ bis Z⁵: Wasserstoff, Halogen, C₁- bis C₁₀-Alkyl, C₆- bis C₁₅-Aryl, C₁- bis C₁₀-Alkoxy oder C₁- bis C₁₅-Aryloxy
und
- z₁ bis z₅: 0, 1, 2, 3, 4 oder 5, wobei die Summe z₁+z₂+z₃+z₄+z₅ der Wertigkeit von M abzüglich der Zahl 1 entspricht,
eingesetzt.

Besonders bevorzugte Metallocenkomplexe der allgemeinen Formel III sind solche, in denen
- M: für ein Metall der IV. Nebengruppe des Periodensystems der Elemente steht, also für Titan, Zirkonium oder Hafnium, insbesondere für Titan
und
- Z¹ bis Z⁵: C₁- bis C₁₀-Alkyl, C₁- bis C₁₀-Alkoxy oder Halogen bedeuten.

Beispiele für solche bevorzugten Metallocenkomplexe sind:
Pentamethylcyclopentadienyltitantrichlorid,
Pentamethylcyclopentadienyltitantrimethyl und
Pentamethylcyclopentadienyltitantrimethylat.

Es können auch solche Metallocenkomplexe, wie in der EP-A 584 646 beschrieben, eingesetzt werden.

Mischungen verschiedener Metallocenkomplexe können auch verwendet werden.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal; bevorzugt ist.

Beispiele für entsprechende Herstellungsverfahren sind u.a. im Journal of Organometallic Chemistry, 369 (1989), 359-370 beschrieben.

Als kationenbildende, insbesondere metalloceniumionenbildende Verbindung B) können die Katalysatorsysteme offenkettige oder cyclische Alumoxanverbindungen enthalten.

Geeignet sind beispielsweise offenkettige oder cyclische Alumoxanverbindungen der allgemeinen Formel IV oder V 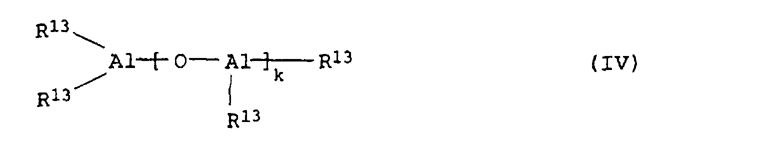 oder 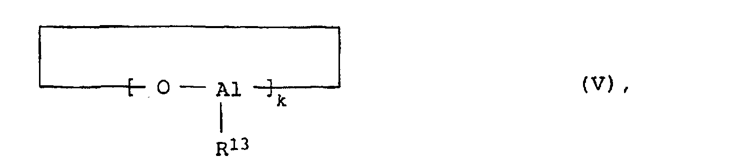 wobei
- R¹³: eine C₁- bis C₄-Alkylgruppe bedeutet, bevorzugt Methyl- oder Ethylgruppe und k für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß k als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 104:1, liegt.

Als metalloceniumionenbildende Verbindung B) können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.

Als starke neutrale Lewissäuren sind Verbindungen der allgemeinen Formel VI

M¹X¹X²X³ (VI)

bevorzugt, in der
- M¹: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel VI, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissauren Kationen sind Verbindungen der allgemeinen Formel VII

[(Y^{a+})Q₁Q₂...Q_{z}]^{d+} (VII)

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy oder Silyl- oder Mercaptylgruppen, wie Trimethylsilyl.
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.

Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Das bei dem erfindungsgemäßen Verfahren eingesetzte Katalysatorsystem kann als Komponente C) eine Aluminiumverbindung enthalten. Diese kann z.B. durch die allgemeine Formel VIII

AlR¹⁴R¹⁵R¹⁶ (VIII),

in der
- R¹⁴ bis R¹⁶: für Wasserstoff, Fluor, Chlor, Brom, Jod oder C₁- bis C₁₂-Alkyl stehen, bevorzugt für C₁- bis C₈-Alkyl,
charakterisiert werden.

Vorzugsweise sind die Reste R¹⁴ bis R¹⁵ gleich und stehen für C₁-C₆-Alkyl wie Methyl, Ethyl, Isobutyl oder n-Hexyl, R¹⁶ bedeutet vorzugsweise Wasserstoff.

Bevorzugt ist die Komponente C) in einer Menge von 1 : 2000 bis 1 : 1, insbesondere 1 : 800 bis 1 : 10 (molares Verhältnis Übergangsmetall aus III zu Al aus VIII) im Katalysatorsystem enthalten.

Als Lösungsmittel für die Metallocenkomplexe werden üblicherweise aromatische Kohlenwasserstoffe eingesetzt, bevorzugt mit 6 bis 20 C-Atomen, insbesondere Xylole, Toluol und Ethylbenzol sowie deren Mischungen.

Die Metallocenkomplexe können ungeträgert oder geträgert eingesetzt werden.

Geeignete Trägermaterialien sind beispielsweise Kieselgele, bevorzugt solche der Formel SiO₂ · bAl₂O₃, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.

Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylalkohol, Polystyrol, syndiotaktisches Polystyrol, Polybutadien, Polycarbonate oder deren Copolymere.

Das Molverhältnis von Übergangsmetallkatalysator A) zu vinylaromatischem Monomer beträgt im allgemeinen 1 : 1000 bis 1 : 10 000 000, bevorzugt jedoch 1 : 2000 bis 1 : 1 000 000.

Das erfindungsgemäße Verfahren wird als Dispersionspolymerisation durchgeführt. Als Dispergiermedium können zweckmäßigerweise aliphatische Kohlenwasserstoffe, insbesondere solche mit 4 bis 10 Kohlenstoffatomen oder Kohlenwasserstoffgemische eingesetzt werden. Beispiele hierfür sind Butan, Pentan, Hexan oder Heptan. Die Konzentration der zu polymerisierenden Monomeren im Dispergiermedium beträgt i.a. zwischen 5 und 65 Volumenprozent, vorzugsweise 10 bis 50 Vol.-%.

Vorzugsweise wird das Dispergierhilfsmittel in einer Menge von 0,1 bis 10 Gew.%, bevorzugt von 1 bis 8 Gew.%, bezogen auf die eingesetzte vinylaromatische Verbindung, verwendet. zweckmäßig wird es in dem zu polymerisierenden vinylaromatischen Monomer gelöst.

Die Polymerisationsbedingungen sind unkritisch. Vorzugsweise polymerisiert man bei Temperaturen von 50 bis 100°C, bei einem Druck von 0,05 bis 30 bar, bevorzugt von 0,1 bis 20 bar. Im Allgemeinen ist die Polymerisation nach 0,5 bis 10 Stunden beendet. Die Polymerisation kann durch Zugabe von protischen Verbindungen, beispielsweise Methanol, abgebrochen werden und das Dispergiermedium durch Filtration oder Verdampfung entfernt und dem Prozeß zurückgeführt werden.

Das erfindungsgemäße Verfahren ist technisch einfach und erlaubt die Herstellung von vinylaromatischen Polymerisaten mit hohem syndiotaktischem Anteil bei niedrigen Viskositäten von unter 4 mPas in gewöhnlichen Rührkesseln. Weiterhin fallen die entstehenden Polymerisate in Partikelform an. Die entstehenden Polymerisate eignen sich zur Herstellung von Fasern, Folien und Formkörpern.

Bevorzugt geht man bei dem erfindungsgemäßen Verfahren so vor, daß man eine Lösung des Dispergierhilfsmittel in dem vinylaromatischen Monomeren herstellt mit einer Konzentration von 0,1 bis 10 Gew.%, bevorzugt von 1 bis 8 Gew.%, bezogen auf die vinylaromatische Verbindung und die so erhaltene Lösung mit z. B. Pentan auf z. B 30 °C erwärmt. Anschließend gibt man die berechnete Menge der Katalysatorkomponenten zu und polymerisiert bei 60 bis 70°C. Man läßt auspolymerisieren (ca. 1 h) und bricht mit Methanol ab.

Das Dispergiermedium kann durch Filtration oder durch Verdampfung entfernt werden und der erhaltene Feststoff kann im Vakuum getrocknet werden. Gegebenenfalls kann das Polymere nach üblichen Methoden der Kunststofftechnologie gereinigt werden, beispielsweise durch Umfällen oder Waschen mit Säuren oder Laugen.

### Beispiele

### Reinigung von 1,1-Diphenylethylen (DPE)

Rohes DPE (Aldrich bzw. Herstellung durch Umsetzung von Phenylmagnesiumbromid mit Acetophenon, Acetylierung mit Essigsäureanhydrid und thermischer Eliminierung von Essigsäure) wird über eine Kolonne mit mindestens 50 theoretischen Böden (Drehbandkolonne; für größere Mengen Kolonne mit Sulzer-Packungen) auf 99,8 % Reinheit ausdestilliert. Das meist schwach gelbe Destillat wird über eine 20 cm Alox-Säule (Woelm-Alumina für die Chromatographie, wasserfrei) filtriert, mit 1,5 n sec-Butyllithium bis zur kräftigen Rotfärbung titriert und im Vakuum (1 mbar) überdestilliert. Das so erhaltene Produkt ist vollkommen farblos und kann direkt in die anionische Polymerisation eingesetzt werden.

### Reinigung der Monomeren und Lösemittel

Das als Lösemittel eingesetzte Cyclohexan (H) wurde über wasserfreiem Aluminiumoxid getrocknet und mit dem Addukt aus sec-Butyllithium und 1,1-Diphenylethylen bis zur Gelbfärbung austitriert. Das Butadien (Bu) wurde von Triisobutylaluminium, das 1,1-Diphenylethylen (DPE) von sec-Butyllithium (s-BuLi) abdestilliert. Als Initiator wurde eine 0,5 molare s-BuLi-Lösung in Cyclohexan verwendet. Styrol (S) wurde direkt vor der Verwendung über Aluminiumoxid getrocknet.

Alle Polymerisationen wurden unter nachgereinigtem Stickstoff unter rigorosem Ausschluß von Luft und Feuchtigkeit durchgeführt. Die Reaktoren wurden vor der Befüllung mehrere Stunden mit einer Lösung von 1,1-Diphenylethylen und sec.-Butyllithium in Cyclohexan unter Rückfluß vorbehandelt.

In den folgenden Beispielen steht Bu für 1,3-Butadien, S für Styrol und DPE für 1,1-Diphenylethylen. Weiterhin beziehen sich die Verhältnisangaben auf das Gewicht.

### Herstellung von Bu-S/DPE-Blockcopolymeren

### Dispergator D1

In einem 10 1 Rührreaktor wurden 7,1 1 Cyclohexan sowie einige Tropfen (ca 2 ml) DPE vorgelegt und mit einer 0,278 molaren sec.-Butyllithiumlösung bis zur beginnenden Rotfärbung austitriert. Nach Zugabe von 15,1 ml (4,2 mmol) der 0,278 molaren sec.-Butyllithiumlösung wurden 1,6 1 (19,4 mol) 1,3-Butadien bei 70°C portionsweise (100 ml) innerhalb von einer Stunde zugegeben und eine weitere Stunde bei 70°C polymerisiert. Die Molekulargewichte des erhaltenen Polybutadienblockes wurden an einer Probe mittels Gelpermeationschromatographie (GPC) und Polybutadien-Eichung bestimmt: M_{w} = 248 000 g/mol, M_{w}/Mₙ = 1,28, M(Peakmaximum = 226 000 g/mol. Zu dem entstandenen Polybutadienblock wurden nacheinander im Abstand von 15 Minuten 98,3 ml (0,56 mol) 1,1-Diphenylethylen und 259 ml (2,25 mol) Styrol zugegeben und weitere 5 Stunden bei 70°C polymerisiert. Nach Abklingen der Reaktion wurde mit Ethanol bis zur Farblosigkeit titriert und mit CO₂/Wasser sauer gestellt. Die farblose Lösung wurde in einem Entgasungsextruder unter Vakuum vom Lösungsmittel befreit und granuliert.

GPC (Polybutadieneichung): zwei Peaks 1. Peak (20% Anteil) M(Peakmaximum) = 32 000 g/mol; 2. Peak (80% Anteil): Peakmaximum) bei 260 000 g/mol.

### Dispergator D2

Analog Dispergator D1 wurden 1,6 1 1,3-Butadien, 98,3 ml 1,1-Diphenylethylen und 259 ml (2,25 mol) Styrol polymerisiert, wobei mit 10 ml (2,78 mmol) einer 0,278 molaren sec.-Butyllithiumlösung gestartet wurde.

GPC Polybutadienblock (Polybutadieneichung): M_{w} = 441 000 g/mol, M_{w}/Mₙ = 1,25, M(Peakmaximum) = 352 000 g/mol

GPC Blockcopolymer (Polybutadieneichung): zwei Peaks 1. Peak (20% Anteil) M(Peakmaximum) = 61 000 g/mol; 2. Peak (80% Anteil): Peakmaximum bei 411 000 g/mol.

### Dispergator D3

Analog Dispergator D1 wurden 1,2 1 ( 14,5 mol) 1,3-Butadien, 73,6 ml (0,42 mol) 1,1-Diphenylethylen und 194 ml (1,69 mol) Styrol polymerisiert, wobei mit 7,5 ml (2,08 mmol) einer 0,278 molaren sec.-Butyllithiumlösung gestartet wurde.

GPC Polybutadienblock (Polybutadieneichung): M_{w} = 379 000 g/mol, M_{w}/Mₙ = 1,30, M(Peakmaximum) = 324 000 g/mol

GPC Blockcopolymer (Polybutadieneichung): zwei Peaks 1. Peak (30% Anteil) M(Peakmaximum) = 57 000 g/mol; 2. Peak (70% Anteil): Peakmaximum bei 394 000 g/mol.

### Herstellung eines S/DPE-Bu-S/DPE-Dreiblockcopolymeren

### Dispergator D4

Analog Dispergator D1 wurden 1,08 1 (13,1 mol) 1,3-Butadien, 149,5 ml (0,85 mol) 1,1-Diphenylethylen und 252,4 ml (2,2 mol) Styrol polymerisiert, wobei mit 49,1 ml (13,7 mmol) einer 0,278 molaren sec.-Butyllithiumlösung gestartet wurde. Die Polymerisation wurde nicht mit Ethanol abgebrochen, sondern mit einer Lösung von 0,5 g Ethylformiat (Kopplungsmittel) in 10 ml Cyclohexan innerhalb 5 Minuten versetzt. Die Aufarbeitung erfolgte wie bei Dispergator 1 beschrieben.

GPC Blockcopolymer (Mischeichung für Polystyrol und Polybutadien 40:60): zwei Peaks 1. Peak (10% Anteil) M(Peakmaximum) = 79 000 g/mol; 2. Peak (90% Anteil): Peakmaximum bei 160 000 g/mol.

### Beispiel 1

In einem 2 l Rührreaktor wurden unter Rühren 250 ml n-Hexan und eine Mischung von 2,61 g des Dispergators D1 in 104,2 g (1 mol) Styrol eingebracht und auf 60°C erhitzt. Hierzu wurden 8,16 ml einer 1,53 molaren Lösung von Methylaluminoxan (MAO) in Toluol (bezogen von der Fa. Witco), 2,08 ml einer 1,0 molaren Lösung von Diisobutylaluminiumhydrid (DIBAH)in Cyclohexan (bezogen von der Fa. Aldrich) und 9,5 mg (0,04 mmol) Pentamethylcyclopentadienyltitantrimethyl Cp*TiMe₃ hinzugegeben. Nach 5 Minuten entstand eine milchig-trübe Dispersion. Die Viskositäten der Dispersion lagen wärend der gesamten Reaktionsdauer unter 1,4 mPas. Nach 2 Stunden wurde die Polymerisation durch Zugabe von 10 ml Methanol abgebrochen und filtriert. Der Filterrückstand wurde mit Methanol gewaschen und bei 50°C im Vakuum getrocknet.

Die Menge des Dispergators betrug 2,5 Gew.-% bezogen auf die Menge des eingesetzten Styrol. Der Umsatz bezogen auf Menge des eingesetzten Styrol betrug 33 %. Das Molekulargewicht Mw und die Molekuargewichtsverteilung wurde mittels Hochtemperatur-Gelpermetionschromatographie GPC (135°C, 1,2,4-Trichlorbenzol, Polystyrolstandard) zu Mw = 201 200, Mw/Mn = 1,9 bestimmt. Der durch ¹³C-NMR-Spektroskopie ermittelte syndiotaktische Anteil betrug 96%. Die Teilchengröße lag im Bereich von 2 bis 10 µm und wurde an einer in Immersionsöl aufgeschlämmten Probe zwischen zwei planen Glasplättchen unter dem Transmissionsmikroskop (Axiophot der Fa. Carl Zeiss) bestimmt.

### Beispiele 2 bis 5

Das Beispiel 1 wurde mit jeweils 2,5 Gew.-% der Dispergatoren D2, D3 und D4 beziehungsweise einer 1:1-Mischung der Dispergatoren D1 und D2, jeweils bezogen auf die Menge an eingesetztem Styrol, wiederholt. Die Ergebnisse sind in Tabelle 1 zusammengestellt.

### Vergleichsversuch V1

Beispiel 1 wurde ohne den Zusatz eines Dispergators wiederholt. Bereits nach 10 Minuten fiel das entstehende Polymer aus. Der Umsatz bezogen auf das eingesetzte Styrol betrug lediglich 16 %.

| Beispiel | Dispergator | M_{w} [g/mol] | M_{w}/Mn | Viskosität [mPas] | Umsatz [%] | Syndiotaktizität [%] |
|---|---|---|---|---|---|---|
| 1 | D1 | 201 200 | 1,9 | 1,34 | 33 | 98 |
| 2 | D2 | 467 400 | 2,5 | 2,11 | 63 | 95 |
| 3 | D3 | 367 800 | 2,3 | 1,96 | 59 | 97 |
| 4 | D1+D2 (je 1,25 Gew.) | 441 000 | 2,7 | 2,20 | 72 | 98 |
| 5 | D4 | 501 300 | 2,6 | 2,31 | 86 | 96 |
| V1 | - | 248 200 | 2,1 | | 16 | 96 |

## Patentansprüche

1. Verfahren zur Herstellung von Polymerisaten aus vinylaromatischen Verbindungen in Dispersion in Gegenwart eines Dispergierhilfsmittels und eines Katalysators erhältlich aus A) einem Übergangsmetallkomplex der II. bis VIII. Nebengruppe, B) einem Kationen bildenden Agens und C) gegebenenfalls einer Aluminiumverbindung, dadurch gekennzeichent, daß man als Dispergierhilfsmittel Blockcopolymere mit mindestens einem Dienblock B und mindestens einem Block S aus einem Copolymeren eines vinylaromatischen Monomeren und 1,1-Diphenylethylen oder dessen an den aromatischen Ringen ggf. mit Alkylgruppen mit bis zu 22 C-Atomen substituierten Derivaten verwendet.

2. Verfahren nach Anspruch 1, **dadurch gekennzeichnet, daß** der Anteil an 1,1-Diphenylethylen , im Block S des Dispergierhilfsmittels im Bereich von 15 bis 65 Gew.-% liegt.

3. Verfahren nach den Ansprüchen 1 oder 2, **dadurch gekennzeichnet, daß** das Blockcopolymere Polybutadien oder Polyisopren einpolymerisiert enthält und der Dienblock B partiell oder vollständig hydriert oder nicht hydriert ist.

4. Verfahren nach den Ansprüchen 1 bis 3, **dadurch gekennzeichnet, daß** der Block S des Blockcopolymeren aus einem Copolymerisat aus Styrol und 1,1-Diphenylethylen besteht.

5. Verfahren nach den Ansprüchen 1 bis 4, **dadurch gekennzeichnet, daß** man das Dispergierhilfsmittel in einer Menge von 0,1 bis 10 Gew.-%, bezogen auf die eingesetzte Menge an vinylaromatischer Verbindung, verwendet.

6. Verfahren nach den Ansprüchen 1 bis 5, **dadurch gekennzeichnet, daß** man als Dispergiermedium aliphatische Kohlenwasserstoffe verwendet.

7. Verfahren nach den Ansprüchen 1 bis 6, **dadurch gekennzeichnet, daß** man einen verzweigenden Monomerbaustein, der mindestens zwei vinylaromatische Reste enthält, in einem Molverhältnis von vinylaromatischen Monomeren zu verzweigendem Baustein zwischen 10 000 000 : 1 und 10 : 1 verwendet.

8. Verfahren nach den Ansprüchen 1 bis 7, **dadurch gekennzeichnet, daß** man als Katalysatorkomponente A) einen Metallocenkomplex der allgemeinen Formel (III) 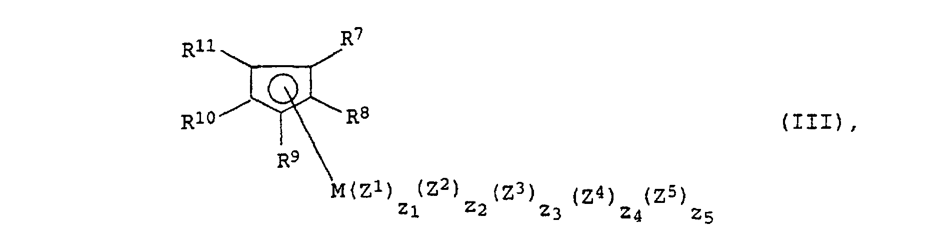 in der die Substituenten und Indices folgende Bedeutung haben:
R⁷ bis R¹¹ Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Si(R¹²)₃,
mit R¹² C₁- bis C₁₀-Alkyl, C₆- bis C₁₅-Aryl oder C₃- bis C₁₀-Cycloalkyl,
M ein Metall der III. bis VI. Nebengruppe des Periodensystems der Elemente oder ein Metall der Lanthanidenreihe
Z¹ bis Z⁵ Wasserstoff, Halogen, C₁- bis C₁₀-Alkyl, C₆- bis C₁₅-Aryl, C₁- bis C₁₀-Alkoxy oder C₁- bis C₁₅-Aryloxy
und
z₁ bis z₅ 0, 1, 2, 3, 4 oder 5, wobei die Summe z₁+z₂+z₃+z₄+z₅ der Wertigkeit von M abzüglich der Zahl 1 entspricht,
einsetzt.

9. Verfahren nach den Ansprüchen 1 bis 8, **dadurch gekennzeichnet, daß** als kationenbildende Verbindung B) offenkettige oder cyclische Alumoxanverbindungen der allgemeinen Formeln IV oder V 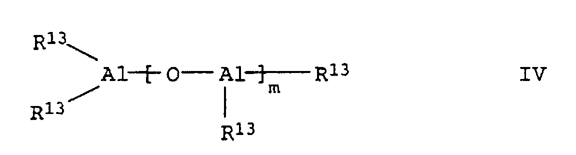 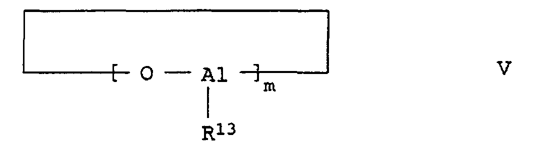 wobei
R¹³ eine C₁- bis C₄-Alkylgruppe bedeutet und m für eine ganze Zahl von 5 bis 30 steht,
eingesetzt werden.

10. Verfahren nach den Ansprüchen 1 bis 8, **dadurch gekennzeichnet, daß** als kationenbildende Verbindung B) eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen eingesetzt wird.

## Claims

1. A process for preparing polymers of vinylaromatic compounds in dispersion in the presence of a dispersing auxiliary and a catalyst obtainable from A) a transition metal complex of subgroups II to VIII, B) a cation-forming agent and C), if desired, an aluminum compound, wherein the dispersing auxiliary used comprises block copolymers having at least one diene block B and at least one block S comprising a copolymer of a vinylaromatic monomer and 1,1-diphenylethylene or its aromatic ring-substituted derivatives, including those substituted by alkyls of up to 22 carbons.

2. A process as claimed in claim 1, wherein the proportion of 1,1-diphenylethylene in the block S of the dispersing auxiliary is from 15 to 65% by weight.

3. A process as claimed in claim 1 or 2, wherein the block copolymer comprises polybutadiene or polyisoprene in copolymerized form and the diene block B is partially or completely hydrogenated or unhydrogenated.

4. A process as claimed in any of claims 1 to 3, wherein the block S of the block copolymer consists of a copolymer of styrene and 1,1-diphenylethylene.

5. A process as claimed in any of claims 1 to 4, wherein the dispersing auxiliary is used in an amount of from 0.1 to 10% by weight, based on the amount of vinylaromatic compound employed.

6. A process as claimed in any of claims 1 to 5, wherein aliphatic hydrocarbons are used as dispersion medium.

7. A process as claimed in any of claims 1 to 6, wherein a branching monomer unit comprising at least two vinylaromatic radicals is used in a molar ratio of vinylaromatic monomers to branching units of from 10,000,000 : 1 to 10 : 1.

8. A process as claimed in any of claims 1 to 7, wherein the catalyst component A) employed is a metallocene complex of the formula (III) 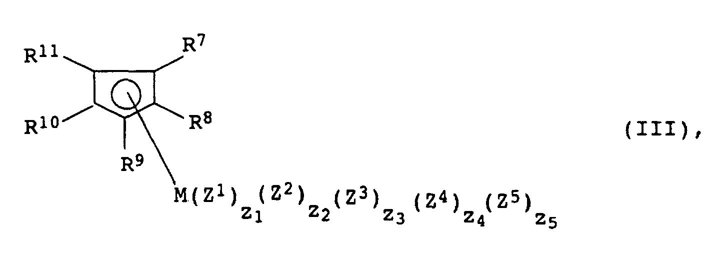 where
R⁷ to R¹¹ are hydrogen, C₁-C₁₀-alkyl, 5- to 7-membered cycloalkyl which in turn can carry C₁-C₆-alkyls as substituents, C₆-C₁₅-aryl or arylalkyl, and where two adjacent radicals may if desired together be cyclic groups of 4 to 15 carbons, or are Si(R¹²)₃,
where R¹² is C₁-C₁₀-alkyl, C₆-C₁₅-aryl or C₃-C₁₀-cycloalkyl,
M is a metal from subgroups III to VI of the Periodic Table of the elements or is a metal of the lanthanide series,
Z¹ to Z⁵ are hydrogen, halogen, C₁-C₁₀-alkyl, C₆-C₁₅-aryl, C₁-C₁₀-alkoxy or C₁-C₁₅-aryloxy
and
z₁ to z₅ are 0, 1, 2, 3, 4 or 5, the sum z₁+z₂+z₃+z₄+z₅ corresponding to the valency of M minus 1.

9. A process as claimed in any of claims 1 to 8, wherein the cation-forming compound B) employed comprises open-chain or cyclic alumoxane compounds of the formula IV or V 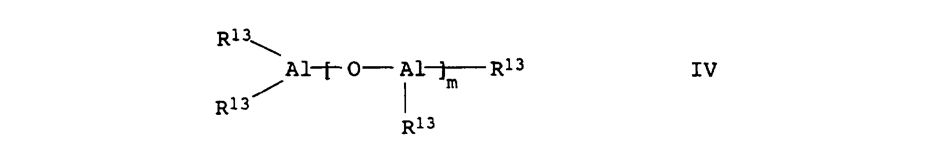 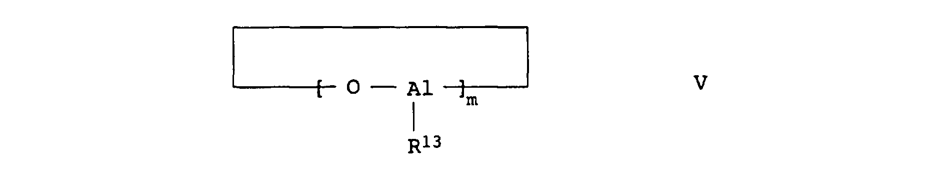 where
R¹³ is C₁-C₄-alkyl and m is an integer from 5 to 30.

10. A process as claimed in any of claims 1 to 8, wherein the cation-forming compound B) employed is a coordination complex compound selected from the group consisting of strong, neutral Lewis acids, ionic compounds having Lewis-acid cations and ionic compounds having Brönsted acids as cations.

## Revendications

1. Procédé de préparation de polymères de composés vinylaromatiques, en dispersion, en présence d'un auxiliaire de dispersion et d'un catalyseur, que l'on peut obtenir à partir de A) un complexe de métal de transition des sous-groupes II à VIII, B) un agent formateur de cations et C) éventuellement un composé d'aluminium, **caractérisé en ce que** l'on utilise en tant qu'auxiliaire de dispersion des copolymères blocs comportant au moins un bloc diène B et au moins un bloc S constitué d'un copolymère d'un monomère vinylaromatique et de 1,2-diphényléthylène ou de leurs dérivés substitués éventuellement sur les noyaux aromatiques par des radicaux alkyle contenant jusqu'à 22 atomes de carbone.

2. Procédé selon la revendication 1, **caractérisé en ce que** la fraction de 1,1-diphényléthylène est, dans le bloc S de l'auxiliaire de dispersion, de l'ordre de 15 à 65% en poids.

3. Procédé selon les revendications 1 ou 2, **caractérisé en ce que** le copolymère contient du polybutadiène ou du polyisoprène copolymérisé et que le bloc diène est partiellement ou totalement hydrogéné ou n'est pas hydrogéné.

4. Procédé selon les revendications 1 à 3, **caractérisé en ce que** le bloc S du copolymère bloc est constitué d'un copolymère de styrène et de 1,1-diphényléthylène.

5. Procédé selon les revendications 1 à 4, **caractérisé en ce que** l'on utilise l'auxiliaire de dispersion en une quantité de 0,1 à 10% en poids, par rapport à la quantité de composé vinylaromatique mise en oeuvre.

6. Procédé selon les revendications 1 à 5, **caractérisé en ce que** l'on utilise en tant que milieu de dispersion des hydrocarbures aliphatiques.

7. Procédé selon les revendications 1 à 6, **caractérisé en ce que** l'on utilise un élément constitutif monomère contenant au moins deux restes vinylaromatiques, en une proportion molaire de monomère vinylaromatique à l'élément constitutif ramifiant de 10.000.000 :1 à 10: 1.

8. Procédé selon les revendications 1 à 7, **caractérisé en ce que** l'on met en oeuvre en tant que composant de catalyseur A) un complexe de métallocène de la formule générale (III) 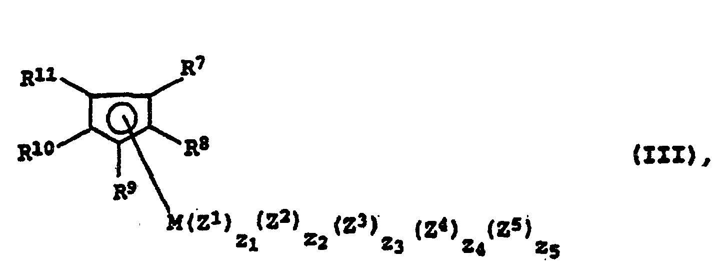 dans laquelle les substituants et indices ont les significations suivantes:
R¹ à R¹¹ représentent de l'hydrogène, ou un radical alkyle en C₁ à C₁₀, cycloalkyle pentagonal à heptagonal, qui peut de son côté porter des radicaux alkyle en C₁ à C₆ comme substituants, aryle ou arylalkyle en C₆ à C₁₅, et où éventuellement aussi deux restes voisins peuvent représenter ensemble des groupes cycliques comportant de 4 à 15 atomes de C, ou bien Si(R¹²)₃,
avec R¹² représentant des radicaux alkyle en C₁ à C₁₀, aryle en C₆ à C₁₅ ou cycloalkyle en C₃ à C₁₀,
M est un métal des sous-groupes III à VI du système périodique des éléments ou un métal de la série des lanthanides,
Z¹ à Z⁵ représentent de l'hydrogène, un halogène, ou un radical alkyle en C₁ à C₁₀, aryle en C₆ à C₁₅, alcoxy en C₁ à C₁₀ ou aryloxy en C₁ à C₁₅
et
z₁ à z₅ ont une valeur de 0, 1, 2, 3, 4 ou 5, la somme z₁ + z₂ + z₃ + z₄ + z₅ correspondant à la valence de M moins le chiffre 1.

9. Procédé selon les revendications 1 à 8, **caractérisé en ce que** l'on met en oeuvre, comme composés B) formateurs de cations, des composés d'alumoxane à chaîne ouverte ou cycliques de la formule générale IV ou V 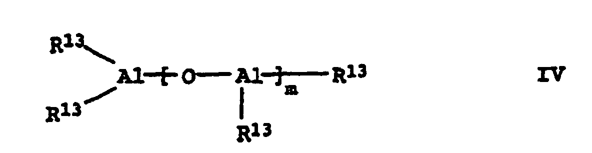 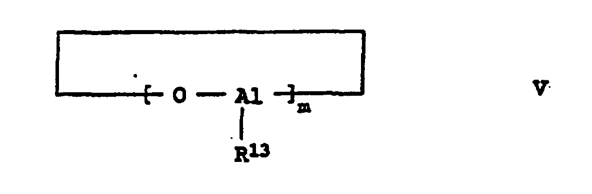 où
R¹³ représente un radical alkyle en C₁ à C₄ et m un nombre entier de 5 à 30.

10. Procédé selon les revendications 1 à 8, **caractérisé en ce que** l'on met en oeuvre comme composé B) formateur de cations un composé complexe de coordination choisi dans le groupe des acides de Lewis forts, neutres, des composés ioniques avec des cations d'acide de Lewis et des composés ioniques avec des acides de Brönsted en tant que cations.
